(19) Europäisches Patentamt
European Patent Office
Office européen des brevets

(11) **EP 0 611 383 B1**

(12) **EUROPÄISCHE PATENTSCHRIFT**

(45) Veröffentlichungstag und Bekanntmachung des Hinweises auf die Patenterteilung:
**10.07.1996  Patentblatt 1996/28**

(21) Anmeldenummer: 92922760.1

(22) Anmeldetag: **03.11.1992**

(51) Int Cl.$^6$: **C08L 7/00**

(86) Internationale Anmeldenummer:
**PCT/DE92/00914**

(87) Internationale Veröffentlichungsnummer:
**WO 93/09177 (13.05.1993 Gazette 1993/12)**

(54) **KAUTSCHUKMISCHUNG ZUR HERSTELLUNG VON GUMMIERZEUGNISSEN MIT TIEFTEMPERATUREINSATZFÄHIGKEIT, ÖLBESTÄNDIGKEIT, GERINGER KRISTALLISATIONSNEIGUNG UND HOHER DYNAMISCHER BELASTBARKEIT**

RUBBER MIXTURE FOR PRODUCING RUBBER ARTICLES USABLE LOW TEMPERATURES OIL-RESISTANT, WITH LOW CRYSTALLIZATION TENDENCIES AND HIGH DYNAMIC STABILITY

MELANGE DE CAOUTCHOUC UTILE POUR PRODUIRE DES ARTICLES EN CAOUTCHOUC UTILISABLES A BASSE TEMPERATURE, RESISTANTS A L'HUILE, AYANT UNE FAIBLE TENDANCE A CRISTALLISER ET UNE HAUTE STABILITE DYNAMIQUE

(84) Benannte Vertragsstaaten:
**AT BE CH DE ES FR GB IE IT LI NL SE**

(30) Priorität: **05.11.1991  DE 4136351**
**28.04.1992  DE 4213937**

(43) Veröffentlichungstag der Anmeldung:
**24.08.1994  Patentblatt 1994/34**

(73) Patentinhaber: **PHOENIX AKTIENGESELLSCHAFT**
**D-21079 Hamburg (DE)**

(72) Erfinder:
• **KLERK, Manfred**
**D-2000 Hamburg 61 (DE)**

• **MERKMANN, Gerhard**
**D-5800 Gotha (DE)**
• **KRAUSE, Karl-Heinz**
**D-9047 Chemnitz (DE)**

(56) Entgegenhaltungen:
**BE-A- 698 519          GB-A- 2 004 286**
**US-A- 3 342 660**

• **CHEMICAL PATENTS INDEX, DOCUMENTATION ABSTRACTS JOURNAL** Section Ch, Week 9128, 11. September 1991 **Derwent Publications Ltd., London, GB; Class A, Page 412, AN 91-203142**

**Beschreibung**

Die Erfindung betrifft eine Kautschukmischung zur Herstellung von Gummierzeugnissen (Vulkanisaten) mit Tieftemperatureinsatzfähigkeit, und zwar selbst unter extremen klimatischen Bedingungen, mit ölbeständigkeit, geringer Kristallisationsneigung und hoher dynamischer Belastbarkeit auf der Basis von Naturkautschuk, insbesondere viskositätsstabilisiertem Naturkautschuk, und üblichen Mischungsingredenzien, wie Füllstoffe, Weichmacher, Alterungsschutzmittel, Vernetzungsmittel, Zinkoxid sowie gegebenenfalls weitere Zusatzstoffe.

Bei Lieferungen von Weitstreckenpersonenwagen in die ehemalige Sowjetunion fordern die dortigen Betreiber, daß jeder zweite Personenwagen mit einer 32 KW-Stromerzeugungsanlage ausgestattet ist (Strom für die Klimatisierung bei Kälte). Jede dieser Stromerzeugungsanlagen umfaßt ein Achsmittelgetriebe (mit zwei Gummikupplungen; sogenannte Gummizentrierkegelkupplungen), eine Gelenkwelle, eine hochelastische Gummi-Vorschaltkupplung und einen Generator. Die Gummivorschaltkupplung verbindet die Gelenkwelle mit dem Generator. Die Weitstreckenpersonenwagen mit der obengenannten Stromerzeugungsanlage und damit auch die Gummikupplungen müssen selbst bei Außentemperaturen von -60° funktionstüchtig sein. Die Gummiwerkstoffe der Kupplung sollen möglichst wenig kristallisieren. Neben dieser starken Kälteeinwirkung tritt bei den Gummivorschaltkupplungen bei der Wagenreinigung noch eine öleinwirkung auf, die jedoch nicht als permanent angesehen werden muß. Zur Erfüllung dieser gleichzeitigen Forderungen nach Tieftemperatureinsatzfähigkeit, ölbeständigkeit, geringer Kristallisationsneigung und hoher dynamischer Belastbarkeit gab es bisher keine geeigneten Gummiwerkstoffe.

Bei der Herstellung einer Kautschukmischung aus verschiedenen Elastomertypen muß deren Verträglichkeit im Polymerverschnitt berücksichtigt werden. Werden Vulkanisateigenschaften verlangt, die von keinem Elastomer allein erfüllt werden können, ist es wichtig, daß ein thermodynamisch verträglicher Elastomerverschnitt bereitsteht, der optimal alle geforderten Eigenschaften besitzt. Die Verwendung einer derartigen Kautschukmischung stellt dann eine Kompromißlösung dar. Außerdem muß ein solcher Polymerverschnitt vernetzbar sein.

Vernetzbare Kautschukmischungen auf der Basis von Naturkautschuk sind bekannt, wobei beispielsweise auf folgende Literaturstellen verwiesen wird: US-A-3 342 660; BE-A-698 519; GB-A-2 004 286; Chemical Patents Index, Documentation Abstracts Journal (Section Ch, Week 9128, 11. September 1991, Derwent Publications Ltd., London, GB; Class A, Page 412, AN 91-203 142). Die bisher bekannten Kautschukmischungen auf der Basis Naturkautschuk erfüllen jedoch nicht die oben genannten Gesamtforderungen. So wird zwar beispielsweise in dem zuletzt erwähnten Dokument Chemical Patents Index eine Kautschukmischung vorgestellt, die expoxidierten Naturkautschuk enthält und für den Einsatz im Tieftemperaturbereich geeignet ist, jedoch nicht alle Forderungen erfüllt.

Mit der erfindungsgemäßen Kautschukmischung auf der Basis von Naturkautschuk, insbesondere viskositätsstabilisiertem Naturkautschuk, in Kombination mit den zusätzlichen Polymerwerkstoffen gemäß Kennzeichen des Anspruchs 1 (Mischungsvariante I) oder des Anspruchs 2 (Mischungsvariante II) steht nun ein Polymerverschnitt zur Verfügung, der die oben erwähnten Forderungen bzw. Bedingungen erfüllt.

Hinsichtlich dieser beiden Mischungsvarianten kommen zweckmäßigerweise folgende Parameter zur Anwendung:

Mischungsvariante I

| 1,4-Polybutadien | |
|---|---|
| Menge: | 10 bis 15 Gew.-% |
| cis-Anteil: | > 90 % |
| epoxidierter Naturkautschuk | |
| Menge: | 10 bis 15 Gew.-% |
| Epoxidationsgrad: | etwa 50 % |

Mischungsvariante II

| Styrol-Butadien-Kautschuk Menge: | 5 bis 10 Gew.-% |
|---|---|
| Ethylen-Acrylat-Kautschuk Menge: | 10 bis 15 Gew.-% |

Die erfindungsgemäßen Kautschukmischungen werden insbesondere zur Herstellung von Formartikeln aus Gummi oder von Verbundartikeln aus Gummi und Metall und/oder Kunststoff, insbesondere von Kupplungen, für den Schienenfahrzeugbereich verwendet.

Innerhalb des nun folgenden experimentellen Teils werden Rezepturen (Tabelle 1) und Prüfergebnisse (Tabelle 2) festgehalten. Dabei stellen A konventionelle, B (Mischungsvariante I) und C (Mischungsvariante II) erfindungsgemäße Rezepturen dar.

Tabelle 1

| Mischungsbestandteile (in Gew.-%) | A | B | C |
|---|---|---|---|
| NR CV[a) | 44,5 | 38,0 | 44,5 |
| SBR[b) | 6,0 | - | 5,5 |
| BR[c) | 13,0 | 11,0 | - |
| ENR[d) | - | 14,5 | - |
| ACM[e) | - | - | 13,5 |
| Ruß N 550[f) | 11,0 | 11,0 | 11,0 |
| Ruß N 330[f) | 7,0 | 7,0 | 7,0 |
| Alterungsschutzmittel | 2,0 | 2,0 | 2,0 |
| Spezialparaffin[g) | 2,0 | 2,0 | 2,0 |
| paraffinischer Weichmacher | 8,0 | 8,0 | 8,0 |
| Beschleuniger | 0,6 | 0,6 | 0,6 |
| Schwefel | 1,3 | 1,3 | 1,3 |
| Verzögerer | 0,3 | 0,3 | 0,3 |
| Zinkoxid | 3,0 | 3,0 | 3,0 |
| Stearinsäure | 1,3 | 1,3 | 1,3 |
| | 100,00 | 100,00 | 100,00 |

(a) viskositätsstabilisierter Naturkautschuk (Money-Viskosität: etwa 60)

(b) Styrol-Butadien-Kautschuk

(c) 1,4-Polybutadien mit cis-Anteil größer 90 %

(d) 50 % epoxidierter Naturkautschuk (Weber und Schaer/Hamburg)

(e) Ethylen-Acrylat-Kautschuk (Du Pont)

(f) Degussa

(g) Hydrierwerke Zeitz

Tabelle 2

| Prüfergebnisse | A | B | C |
|---|---|---|---|
| Sprödigkeitstemperatur °C | -60 | -70 | -67 |
| Verlustfaktor tan δ bei -40°C | 0,078 | 0,067 | 0,062 |
| | | | |
| Quellversuche | | | |
| (Sowjetisches Getriebeöl TSZ9) | | | |
| Lagertemperatur | Raumtemperatur | | |
| Volumenquellung nach 24h | 22,60% | 6,68% | 3,59% |
| Volumenquellung nach 48h | 40,12% | 10,51% | 5,83% |
| Gewichtsquellung nach 24h | 20,88% | 7,14% | 4,16% |
| Gewichtsquellung nach 48h | 37,21% | 10,72% | 6,27% |
| Kristallisationsverhalten | | | |
| (gemessen an der Kupplung GM 056) | | | |
| Verdrehwinkel $\varphi_0$ | 9,3° | 3,3° | 7,4° |
| (sogenannter Nullzeitpunkt nach 1 Tag Einfrierung bei -25°C) | | | |
| Verdrehwinkel $\varphi_{14}$ | 7,5° | 2,3° | 5,0° |
| (nach 14 Tagen Einfrierung bei -25°C) | | | |
| $Gr_{14}$ | 1,24 | 1,44 | 1,48 |
| (Steifigkeitsfaktor, gemessen als Schubmodul zur Beurteilung des Kristallisationsverhaltens $Gr_{14} = \frac{\varphi_0}{\varphi_{14}}$ ) | | | |

EP 0 611 383 B1

Ideal ist für $Gr_{14} = 1,0$, d.h. keinerlei Versteifung nach 14 tägiger Lagerung der Kupplung bei -25°C. In der Praxis ist dies jedoch nicht existent, da alle Werkstoffe (Gummi) mehr oder weniger stark bei Kältelagerung kristallisieren. Aus der Erfahrung sind Werte bis ca. 3,0 als geringes Kristallisationsverhalten zu deuten. Die Prüfung bislang bekannter Kupplungen, welche als "extrem kältebeständig" ausgewiesen waren, ergaben einen $Gr_{14}$-Wert von ca. 8, d.h. die Kupplung ist nicht mehr funktionstüchtig.

**Patentansprüche**

1. Kautschukmischung zur Herstellung von Gummierzeugnissen mit

   - Tieftemperatureinsatzfähigkeit,
   - Ölbeständigkeit,
   - geringer Kristallisationsneigung und
   - hoher dynamischer Belastbarkeit

   auf der Basis von Naturkautschuk, insbesondere viskositätsstabilisiertem Naturkautschuk, sowie üblichen Mischungsingredenzien, wie Füllstoffe, Weichmacher, Alterungsschutzmittel, Vernetzungsmittel, Zinkoxid sowie gegebenenfalls weitere Zusatzstoffe, dadurch gekennzeichnet, daß die Kautschukmischung zusätzlich

   - 5 bis 30 Gew.-% 1,4-Polybutadien mit einem cis-Anteil von größer 90% und
   - 5 bis 30 Gew.-% epoxidierten Naturkautschuk enthält (Mischungsvariante I).

2. Kautschukmischung zur Herstellung von Gummierzeugnissen mit

   - Tieftemperatureinsatzfähigkeit,
   - Ölbeständigkeit,
   - geringer Kristallisationsneigung und
   - hoher dynamischer Belastbarkeit

   auf der Basis von Naturkautschuk, insbesondere viskositätsstabilisiertem Naturkautschuk, sowie üblichen Mischungsingredenzien, wie Füllstoffe, Weichmacher, Alterungsschutzmittel, Vernetzungsmittel, Zinkoxid sowie gegebenenfalls weitere Zusatzstoffe, dadurch gekennzeichnet, daß die Kautschukmischung zusätzlich

   - 5 bis 20 Gew.-% Styrol-Butadien-Kautschuk und
   - 5 bis 30 Gew.-% Ethylen-Acrylat-Kautschuk enthält (Mischungsvariante II).

3. Kautschukmischung nach Anspruch 1, dadurch gekennzeichnet, daß diese 10 bis 15 Gew.-% 1,4-Polybutadien und 10 bis 15 Gew.-% epoxidierten Naturkautschuk enthält.

4. Kautschukmischung nach Anspruch 1 oder 3, dadurch gekennzeichnet, daß bei dem epoxidierten Naturkautschuk etwa 50 % der Doppelbindungen epoxidiert sind.

5. Kautschukmischung nach Anspruch 2, dadurch gekennzeichnet, daß diese 5 bis 10 Gew.-% Styrol-Butadien-Kautschuk enthält.

6. Kautschukmischung nach Anspruch 2 oder 5, dadurch gekennzeichnet, daß diese 10 bis 15 Gew.-% Ethylen-Acrylat-Kautschuk enthält.

7. Verwendung einer Kautschukmischung nach einem der Ansprüche 1 bis 6 zur Herstellung von Formartikeln aus Gummi oder von Verbundartikeln aus Gummi und Metall und/oder Kunststoff, insbesondere von Kupplungen, für den Schienenfahrzeugbereich.

**Revendications**

1. Mélange de caoutchoucs pour la fabrication d'articles en caoutchouc

4

-   utilisables à basse température,
-   résistants à l'huile,
-   ayant une faible tendance à la cristallisation et
-   ayant une capacité de charge dynamique élevée,

à base de caoutchouc naturel, en particulier de caoutchouc de viscosité stabilisée, ainsi que d'ingrédients de mélange usuels, tels que des charges, des plastifiants, des antivieillisseurs, des réticulants, de l'oxyde de zinc et éventuellement d'autres additifs,
caractérisé en ce qu'il contient en plus

-   5 à 30% en poids de 1,4-polybutadiène avec une part d'isomère cis de plus de 90% et
-   5 à 30% en poids de caoutchouc naturel époxydé (variante de mélange I).

2.  Mélange de caoutchoucs pour la fabrication d'articles en caoutchouc

-   utilisables à basse température,
-   résistants à l'huile,
-   ayant une faible tendance à la cristallisation et
-   ayant une capacité de charge dynamique élevée,

à base de caoutchouc naturel, en particulier de caoutchouc de viscosité stabilisée, ainsi que d'ingrédients de mélange usuels, tels que des charges, des plastifiants, des antivieillisseurs, des réticulants, de l'oxyde de zinc et éventuellement d'autres additifs,
caractérisé en ce qu'il contient en plus

-   5 à 20% en poids de caoutchouc styrène/butadiène et
-   5 à 30% en poids de caoutchouc éthylène/acrylate (variante de mélange II).

3.  Mélange de caoutchoucs selon la revendication 1, caractérisé en ce qu'il contient 10 à 15% en poids de 1,4-polybutadiène et 10 à 15% en poids de caoutchouc naturel époxydé.

4.  Mélange de caoutchoucs selon la revendication 1 ou 3, caractérisé en ce que, dans le caoutchouc naturel époxydé, 50% environ des doubles liaisons sont époxydées.

5.  Mélange de caoutchoucs selon la revendication 2, caractérisé en ce qu'il contient 5 à 10% en poids de caoutchouc styrène/butadiène.

6.  Mélange de caoutchoucs selon la revendication 2 ou 5, caractérisé en ce qu'il contient 10 à 15% en poids de caoutchouc éthylène/acrylate.

7.  Utilisation d'un mélange de caoutchoucs selon l'une quelconque des revendications 1 à 6 pour la fabrication d'articles moulés en caoutchouc ou d'articles composites en caoutchouc et en métal et/ou en matière plastique, en particulier de joints pour le secteur des véhicules sur rails.

**Claims**

1.  An india rubber mixture for the production of articles of rubber having:

-   capability of use at low temperatures;
-   resistance to oil;
-   low tendency to crystallization; and
-   high dynamic loading capacity;

on the basis of natural india rubber, especially viscosity-stabilized natural india rubber, as well as the usual ingredients of a mixture, such as fillers, softeners, anti-ageing agents, cross-linking agents and zinc oxide, as well as further additives if necessary,
characterized in that the india rubber mixture contains in addition:

- 5 to 30 % by wt. of 1,4-polybutadiene with a cis-proportion higher than 90 %. and
- 5 to 30 % by wt. of epoxidized natural india rubber (mixture variant I).

2. An india rubber mixture for the production of articles of rubber having:

- capability of use at low temperatures;
- resistance to oil;
- low tendency to crystallization; and
- high dynamic loading capacity;

on the basis of natural india rubber, especially viscosity-stabilized natural india rubber, as well as the usual ingredients of a mixture, such as fillers, softeners, anti-ageing agents, cross-linking agents and zinc oxide, as well as further additives if necessary,
characterized in that the india rubber mixture contains in addition:

- 5 to 20 % by wt. of styrene-butadiene india rubber; and
- 5 to 30 % by wt. of ethylene-acrylate india rubber (mixture variant II).

3. An india rubber mixture as in Claim 1, characterized in that it contains 10 to 15 % by wt. of 1,4-polybutadiene and 10 to 15 % by wt. of epoxidized natural india rubber.

4. An india rubber mixture as in Claim 1 or 3, characterized in that in the case of the epoxidized natural india rubber about 50 % of the double bonds are epoxidized.

5. An india rubber mixture as in Claim 2, characterized in that it contains 5 to 10 % by wt. of styrene-butadiene india rubber.

6. An india rubber mixture as in Claim 2 or 5, characterized in that it contains 10 to 15 % by wt. of ethylene-acrylate india rubber.

7. Use of an india rubber mixture as in one of the Claims 1 to 6 for the production of moulded articles of rubber or of composite articles of rubber and metal and/or plastics, especially of couplings for the field of railway vehicles.